# EUROPÄISCHE PATENTSCHRIFT

(11) **EP 2 018 282 B1**
(45) Veröffentlichungstag und Bekanntmachung des Hinweises auf die Patenterteilung: **07.04.2010**
(21) Anmeldenummer: 07721971.5
(22) Anmeldetag: 28.02.2007
(51) Int. Cl.: B60G 21/055, B60G 13/00, B60G 17/015, B60G 21/10

(54) **STABILISATOR FÜR EIN KRAFTFAHRZEUG**
STABILIZER FOR A MOTOR VEHICLE
STABILISATEUR POUR UN VÉHICULE AUTOMOBILE

(30) Priorität: 28.02.2006 DE 102006009524
(43) Veröffentlichungstag der Anmeldung: 28.01.2009
(73) Patentinhaber: Pnp Automotive GmbH, 19089 Crivitz (DE)
(72) Erfinder: BEETZ, Stefan, 19089 Barnin (DE); FESTNER, Gerald, 19288 Klein Krams (DE); BAUSTIAN, Torsten, 19089 Crivitz (DE)
(74) Vertreter: Gulde Hengelhaupt Ziebig & Schneider
(86) Internationale Anmeldenummer: PCT/DE2007/000370
(87) Internationale Veröffentlichungsnummer: WO 2007/098743

(56) Entgegenhaltungen:
- DE-A1- 3 723 239
- DE-A1- 3 822 811
- DE-A1- 10 242 552
- DE-U1- 20 303 107
- JP-A- 8 011 516
- US-A- 1 971 960
- US-A- 6 039 326

## Beschreibung

Die Erfindung bezieht sich auf einen Stabilisator nach dem Oberbegriff des Anspruchs 1. Derartige Stabilisatoren werden in der Fahrzeugtechnik eingesetzt.

Kraftfahrzeuge neigen im Straßenverkehr zum Wanken um ihre Rollachse, zum Nicken um ihre Querachse und zum Gieren um ihre Hochachse. Diese Bewegungen sind in der Regel nicht gewollt und haben ihre Ursache in von Außen auf das Kraftfahrzeug wirkende Belastungen. Solche Belastungen treten beispielsweise in Kurven, bei Fahrbahnunebeneinheiten, im unebenen Gelände oder bei einer seitlichen Windlast sowie beim Bremsen und Beschleunigen auf.

Zur Vermeidung oder Verminderung von Wankbewegungen ist es grundsätzlich bekannt, jeder Achse eines Kraftfahrzeuges einen nach dem Drehstabprinzip arbeitenden Stabilisator zuzuordnen. Dieser Stabilisator ist einteilig ausgeführt und besteht aus einem quer zur Fahrtrichtung angeordneten Drehstab und zwei sich zu beiden Seiten des Drehstabes anschließende Drehschenkel, die etwa in Fahrtrichtung verlaufen. Die freien Enden der beiden Drehschenkel sind jeweils an einer Radaufhängung beweglich angebunden. Der Durchmesser, die gesamte Länge und die Eigenschaften des Materials bestimmen den Verdrehwinkel und die Federrate des einteiligen Stabilisators. Im Bereich des Drehstabes ist der Stabilisator über zwei lose Lager mit dem Fahrzeugaufbau verbunden, die eine im Torsionsbereich des Stabilisators liegende Verdrehung des Stabilisators gegenüber dem Fahrzeugaufbau ermöglichen.
Bei einer unterschiedlichen oder gar gegensätzlich gerichteten Belastung der beiden Räder einer Achse verändert sich die Lage der beiden Drehschenkel zueinander. Aus der dadurch entstehenden Verdrehung des Stabilisators entwickeln sich Torsionskräfte, die den Bewegungen der beiden Räder einer Achse entgegenwirken. Dadurch werden wankende Bewegungen des Fahrzeugaufbaus vermieden oder zumindest abgeschwächt.
Der Nachteil dieses einteiligen Stabilisators besteht darin, dass die gewählte Federrate des Stabilisators nur auf einen konkreten Belastungsfall im Fahrbetrieb ausgelegt werden kann. Dies führt zwangsläufig dazu, dass bei abweichenden Belastungsfällen der Stabilisator entweder zu weich oder zu hart reagiert. Darunter leiden entweder der Fahrkomfort, die Fahrsicherheit oder die mögliche Verschränkung der Achse bei Geländefahrt und damit die Traktion bei angetriebenen Rädern. Ein weiterer Nachteil besteht darin, dass der einteilige Stabilisator nicht dazu beiträgt, die um die Querachse des Kraftfahrzeuges drehende Nickbewegung zu vermeiden oder abzuschwächen.

Für den Einsatz in Kraftfahrzeugen sind weitestgehend geteilte Stabilisatoren im Einsatz, wie er beispielsweise in der DE 19754539 A1 beschrieben ist. Dieser geteilte Stabilisator besteht aus zwei etwa gleich langen Stabilisatorteilen und einem, beide Stabilisatorteile miteinander verbinden Aktuator bestehen. Dabei ist der Aktuator als ein hydraulischer Schwenkmotor ausgeführt, der über seinen Stator mit dem einen Stabilisatorteil und über seinen Rotor mit dem anderen Stabilisatorteil verbunden ist. Mit seinem Schwenkbereich bringt der Schwenkmotor einen zusätzlichen Verdrehweg mit ein und mit seiner hydraulischen Kraft erzeugt der Schwenkmotor eine Vorspannung im Stabilisator. Dies bewirkt, dass die Wankbewegungen des Fahrzeuges bei Bedarf durch den Einsatz des Schwenkmotors reduziert werden. Die Nickbewegung und die Gierbewegung des Kraftfahrzeuges werden damit nicht vermieden.

In der DE 199 23 100 C1 wird nun ein geteilter Stabilisator beschrieben, der einen Einsatz sowohl auf der Straße als auch im Gelände ermöglicht. Dazu ist der Aktuator als eine hydraulische Schaltkupplung ausgeführt. Im eingekuppelten Zustand sind die beiden Stabilisatorteile direkt miteinander verbunden, sodass die Wirkungen eines einteiligen Stabilisators eintreten und der Einsatz auf der Straße möglich ist. Im ausgekuppelten Zustand sind die beiden Stabilisatorteile getrennt. Das wird, wie bereits beschrieben, den Einsatzbedingungen im Gelände gerecht. Aber auch mit dieser Ausführung können die unerwünschten Nickbewegungen und die Gierbewegungen des Kraftfahrzeuges nicht beeinflusst werden.

In der DE 10 2004 002 550 A1 ist nun ein geteilter Stabilisator mit einem als hydraulischen Schwenkmotor ausgebildeten Aktuator beschrieben. Dieser Schwenkmotor verbindet in bekannter Weise beide Stabilisatorteile. Zu diesem ersten Schwenkmotor ist ein zweiter hydraulischer Schwenkmotor vorgesehen, der das Gehäuse des ersten Schwenkmotors mit dem Fahrzeugaufbau verbindet und beide Baugruppen gegeneinander schwenkbar ausführt. Bei einer durch eine Bremsung eingeleiteten Nickbewegung des Fahrzeugaufbaus verdreht sich auch der zweite Schwenkmotor, der dadurch den Verdrehwinkel des ersten Schwenkmotors verringert und so der Nickbewegung entgegenwirkt. Durch die symmetrische Anordnung der beiden Schwenkmotore überträgt sich diese Blockade gleichmäßig auf beide Räder, sodass das Kraftfahrzeug weitestgehend in seiner aufrechten Lage verbleibt.
Aber auch dieser geteilte Stabilisator hat Nachteile. So ist der gerätetechnische Aufwand relativ groß, weil zwei Schwenkmotore erforderlich sind, die obendrein in komplizierender Weise ineinander verbaut sind.
Ein ähnlicher Stabilisator ist in der DE 19802489 A1 beschrieben, dessen mittig angeordneter Schwenkmotor eine zusätzliche Abstützung besitzt. Diese Abstützung wirkt der Nickbewegung entgegen.
Weiterhin zeigt DE 3723239 A1 einen Stabilisator nach dem Oberbegriff des Anspruchs 1.

Der wesentliche Nachteil aller benannten geteilten Stabilisatoren in Verbindung mit Schwenkmotoren besteht darin, dass diese im fail-save Fall nur eine hydraulische Rückfallebene besitzen und damit nicht mechanisch verbunden sind. Des Weiteren wird die Einbausituation und somit die Durchführung durch das Fahrzeug eingeschränkt.

Der Erfindung liegt daher die Aufgabe zu Grunde, einen einteiligen Stabilisator so auszuführen, dass er den unerwünschten Wank-, Nick- und Gierbewegungen des Kraftfahrzeuges entgegenwirkt und dabei bei unterschiedlichen Belastungsfällen einen ausreichenden Fahrkomfort und eine ausreichende Sicherheit gewährleistet.
Diese Aufgabe wird durch die kennzeichnenden Merkmale des Anspruches 1 gelöst. Weitere Ausgestaltungsmöglichkeiten ergeben sich aus den Unteransprüchen 2 bis 11. Dabei liegt der besondere Vorteil in der hohen und variantenreichen Funktionalität. Dadurch, dass pro Achse zwei Aktuatoren eingesetzt werden, die sich einerseits am Fahrzeugaufbau abstützen und andererseits in die Torsion des einteiligen Drehstabes oder eines torsionsfest verbundenen, mehrteiligen, Drehsstabes eingreifen, kann die Federrate als auch die Vorspannung sowie der Verdrehwinkel des Drehstabes sowohl stufenweise als auch proportional verändert werden. Mit der Verknüpfung der beiden Aktuatoren einer Achse und den Aktuatoren weiterer Achsen kann das Torsionsverhalten der Stabilisatoren so beeinflusst werden, dass sich das Wankverhalten, das Nickverhalten und das Gierverhalten des Kraftfahrzeuges wesentlich verbessert.

Die Erfindung soll anhand zweier Ausführungsbeispiele näher erläutert werden. Dazu zeigen:
- Fig. 1:: eine schematisierte Darstellung eines eingebauten Stabilisators mit zwei Aktuatoren,
- Fig. 2:: den Aktuator als eine schaltbare Permanent-Magnetkupplung im Längsschnitt,
- Fig. 3:: die Permanent-Magnetkupplung nach der Fig. 2 im Querschnitt,
- Fig. 4:: den Aktuator als ein hydraulischer Schwenkmotor im Längsschnitt,
- Fig. 5:: den Schwenkmotor nach der Fig. 4 im Querschnitt und
- Fig. 6:: einen hydraulischen Schaltplan zur Verknüpfung der hydraulischen Schwenkmotore auf beiden Fahrzeugachsen.

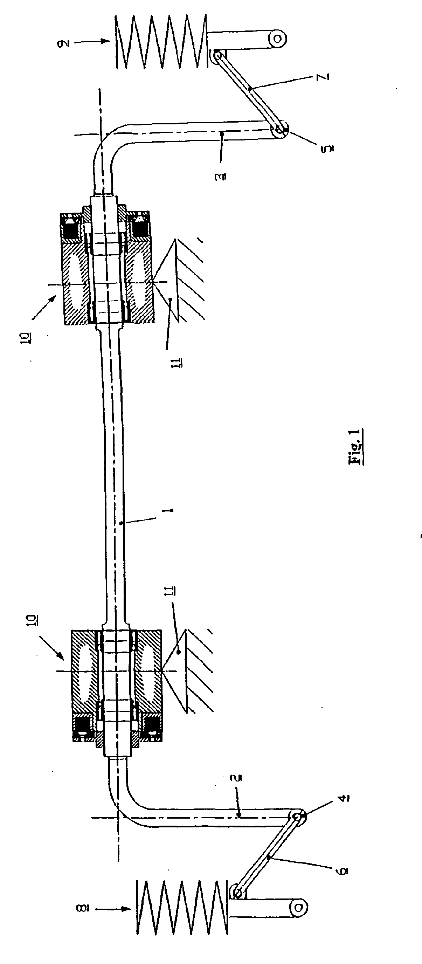

Nach der Fig. 1 besteht der Stabilisator aus einem einteiligen Drehstab, der sich zusammensetzt aus einem quer zur Fahrtrichtung ausgerichteten Torsionsstab 1 und zwei, sich zu beiden Seiten des Drehsteges 1 anschließende Drehschenkel 2 und 3. Beide Drehschenkel 2, 3 verlaufen etwa in Fahrtrichtung. An den Enden der beiden Drehschenkel 2, 3 befinden sich Drehgelenke 4 und 5, die jeweils über ein Koppelelement 6 und 7 mit einer Radaufhängung 8 und 9 verbunden sind.
Im Bereich des Torsionsstabes 1 besitzt der Stabilisator zwei Aktuatoren 10, deren Gehäuse als festes Lager 11 ausgebildet und starr mit dem Fahrzeugaufbau des Kraftfahrzeuges verbunden sind. Über dieses Lager 11 können Kräfte und Drehmomente aus dem Aktuator 10 in den Fahrzeugaufbau eingeleitet werden. Dabei sind beide Aktuatoren 10 in einem größten möglichen Abstand zueinander angeordnet. Beide Aktuatoren 10 sind baugleich und so ausgebildet, dass er den Torsionsstab 1 umgreift und in gesteuerter Weise der Verdrehbewegung des Torsionsstabes 1 entgegenwirkt. Dementsprechend können diese Aktuatoren 10 beispielsweise als eine gesteuerte Dauermagnetkupplung, als eine gesteuerte Elektromagnetkupplung, als ein hydraulisch gesteuerter Schwenkmotor oder als eine verstellbare Viscokupplung ausgebildet sein. Auch andere Kupplungsarten oder auch Bremsen können eingesetzt werden und so soll die Erfindung nicht auf diese Aufzählung von Aktuatoren 10 beschränkt bleiben.

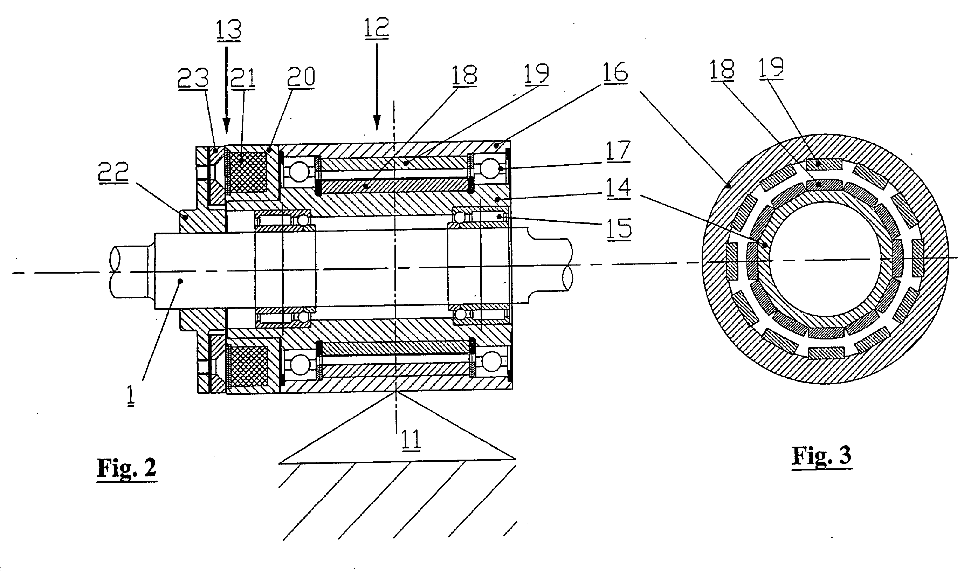

Gemäß der Fig. 2 und 3 ist der Aktuator 10 in einer ersten Ausführungsform als eine abschaltbare Permanent-Magnetkupplung ausgebildet. Dazu besteht der Aktuator aus der eigentlichen Permanent-Magnetkupplung 12 und einer elektromagnetischen Schaltkupplung 13. Die Permanent-Magnetkupplung 12 besitzt einen inneren Rotorring 14, der den Torsionsstab 1 des Stabilisators umgreift und über zwei Drehlager 15 mit dem Torsionsstab 1 verbunden ist. Die Permanent-Magnetkupplung 12 besitzt weiter einen äußeren Statorring 16, der einerseits über zwei Drehlager 17 mit dem inneren Rotorring 14 und andererseits über das Lager 11 mit dem Fahrzeugaufbau verbunden ist. Auf der äußeren Umfangsfläche des inneren Rotorringes 14 und auf der inneren Umfangsfläche des äußeren Statorringes 16 befinden sich magnetische Polleisten 18 und 19, die sich axial über die Länge des Rotorringes 14 und des Statorringes 16 erstrecken und die gleichmäßig auf den jeweiligen Umfangsflächen verteilt angeordnet sind. Dabei sind, wie es insbesondere die Fig. 3 zeigt, die inneren Polleisten 18 und die äußeren Polleisten 19 in gleicher Anzahl vorhanden und immer paarweise zueinander ausgerichtet. In der magnetisch ausgerichteten Position stehen sich jeweils eine innere Polleiste 18 und eine äußere Polleiste 19 gegenüber.
An einer Stirnseite der Permanent-Magnetkupplung 12 befindet sich die elektromagnetische Schaltkupplung 13, die im Wesentlichen aus einem Magnetkörper 20 mit einer Erregerspule 21 und einem, in einem Mitnehmerflansch 22 federnd gelagerten Ankerkörper 23. Dabei sind der Mitnehmerflansch 22 und der Torsionsstab 1 des Stabilisators einerseits und der Magnetkörper 20 und der innere Rotorring 14 der Permanent-Magnetkupplung 12 andererseits drehfest miteinander verbunden.
Diese schaltbare Permanent-Magnetkupplung 12 hat folgende Funktion:
Bei einer normalen Fahrt ohne eine von außen auf das Fahrzeug wirkende Belastung oder Lenk-, Beschleunigungs-, Bremstätigkeit sind beide Permanent-Magnetkupplungen 12 gleichermaßen geschaltet. Dabei ist die jeweilige elektromagnetische Schaltkupplung 13 geöffnet, sodass die Permanent-Magnetkupplung 12 vom Torsionsstab 1 des Stabilisators getrennt ist. In diesem Fall ist der einteilige Stabilisator mit seinem Torsionsstab 1 und den beiden Drehschenkel 2, 3 über seine gesamte Länge an der Aufnahme der von außen eingeleiteten Momente beteiligt. Dementsprechend reagiert der Stabilisator weich, was den Fahrkomfort positiv beeinflusst.
Beim Auftreten äußerer Belastungen oder bei Lenk-, Beschleunigungs-, Bremstätigkeit federn die Räder unterschiedlich ein oder aus und so kommt es zu einer stärkeren Belastung des Stabilisators. In diesem Fall werden die Belastungsfälle über entsprechende Sensoren erfasst und bewertet. In Abhängigkeit von der Größe und der Richtung des Belastungsfalles werden entweder die eine, die andere oder beide Permanent-Magnetkupplungen 12 angesteuert. Dazu wird die elektromagnetische Schaltkupplung 13 der entsprechenden Permanent-Magnetkupplung 12 geschlossen, sodass die elektromagnetische Schaltkupplung 13 den inneren Rotorring 14 mit dem Torsionsstab 1 des Stabilisators drehfest verbindet. Damit werden auch die von dem Torsionsstab 1 ausgehenden Torsionskräfte auf den inneren Rotorring 14 der Permanent-Magnetkupplung 12 übertragen. Die sich gegenüberstehenden Polleisten 18, 19 der Permanent-Magnetkupplung 12 sind nun so ausgeführt, dass die magnetischen Kräfte den Torsionskräften des Stabilisators standhalten. Damit werden die Torsionskräfte über das Lager 11 in den Fahrzeugaufbau eingeleitet. Das verkürzt die wirksame Länge des Stabilisators, wodurch sich gleichzeitig die Federrate des Stabilisators erhöht. Der Stabilisator reagiert also härter, was die Sicherheit des Kraftfahrzeuges erhöht.

Bei einem mittleren Belastungsfall wird nur eine Permanent-Magnetkupplung 12 geschaltet, sodass dann nur ein Drehschenkel 2 oder 3 und der Torsionsstab 1 an der Torsion beteiligt sind. Wird dagegen ein stärkerer Belastungsfall erfasst, dann werden beide Permanent-Magnetkupplungen 12 betätigt. Dadurch werden die von außen eingeleiteten Kräfte/ Momente über den Drehschenkel 2 bzw. 3 bis zu der zugeschalteten Permanent-Magnetkupplungen 12 geleitet. Die zusätzlichen Momente der Permanent-Magnetkupplungen 12 wirken auf die Drehschenkel 2; 3, wodurch sich die Federrate des Stabilisators erhöht. Dieser Stabilisator mit seiner schaltbaren Permanent-Magnetkupplung 12 ist also in vorteilhafter Weise geeignet, in verschiedenen Torsionsstufen auf unterschiedliche Belastungsfälle zu reagieren.

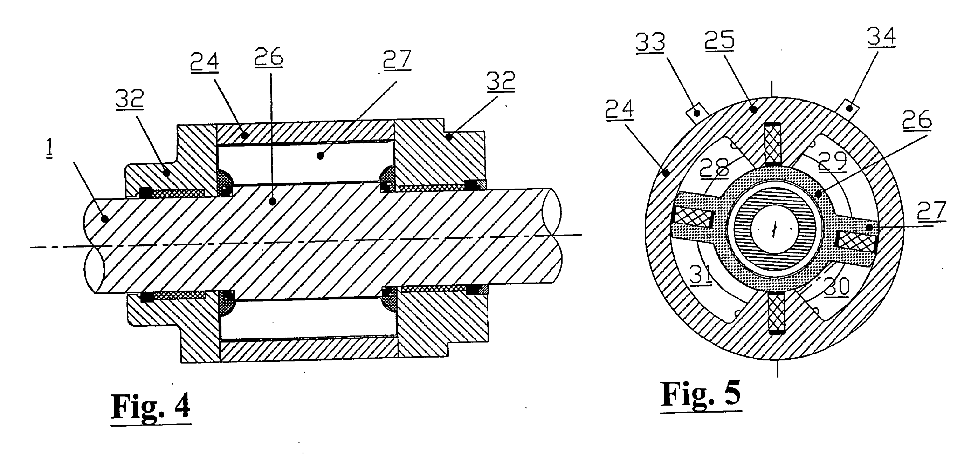

Gemäß der Fig. 4 und 5 ist der Aktuator 10 in einer zweiten Ausführungsform als ein ein- oder mehrflügeliger hydraulischer Schwenkmotor ausgebildet. Der hier als Beispiel dargestellte Schwenkmotor besteht in bekannter Weise aus einem äußeren Statorgehäuse 24 mit zwei radial nach innen ausgerichteten Statorflügeln 25 und einem im Statorgehäuse 24 eingepassten Rotor 26 mit zwei radial nach außen zeigenden Rotorflügeln 27. Der Rotor 26 ist mit dem Torsionsstab 1 des Stabilisators einteilig oder zumindest drehfest verbunden. Die beiden Statorflügel 24 und die beiden Rotorflügel 27 bilden zwischen sich vier volumenveränderliche Kammern 28, 29, 30, 31 aus, die stirnseitig durch zwei Gehäusedeckel 32 verschlossen sind. Die zwei sich gegenüberliegenden Kammern 28, 30 sowie 29, 31 sind jeweils über einen nicht dargestellten Kanal miteinander verbunden und damit funktionell kurzgeschlossen. Alle Kammern 28, 29, 30, 31 sind untereinander und nach außen abgedichtet. Die beiden gleichsinnigen Kammern 28, 30 und die beiden anderen gleichsinnigen Kammern 29, 31 besitzen jeweils einen Hydraulikanschluss 33 und 34.

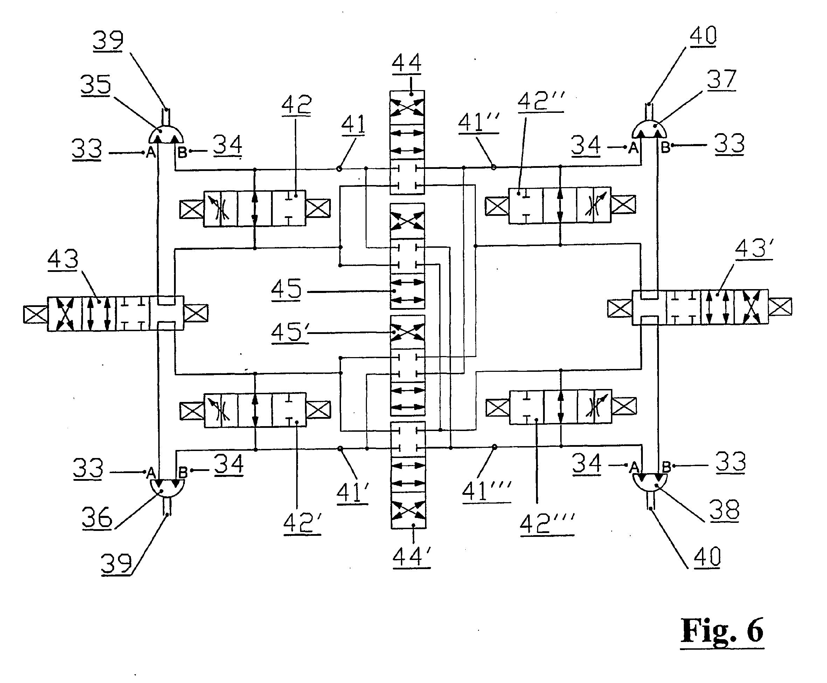

Die Fig. 6 zeigt einen ausgewählten Hydraulikschaltplan zur Versorgung der Kammern 28, 29, 30, 31 der hydraulischen Schwenkmotore 35, 36, 37, 38, die sich sowohl auf der Vorderachse 39 als auch auf der Hinterachse 40 befinden. Dabei sind bei jedem der Schwenkmotore 35, 36, 37, 38 die beiden Hydraulikanschlüsse 33 und 34 über eine Ringleitung 41, 41', 41", 41"' miteinander verbunden. In jeder dieser Ringleitungen 41, 41', 41", 41"' befindet sich ein steuerbares Dreistellungsventil 42, 42', 42", 42"' mit den drei Schaltstellungen Sperren, drosselfrei Verbinden und Drosseln. Jeder Achse 39 und 40 ist ein ebenfalls steuerbares Vierstellungsventil 43, 43' zugeordnet, das die beiden Ringleitungen 41, 41', 41 ", 41"' der jeweiligen Achse 39, 40 miteinander verbindet oder sperrt. Dazu hat das schaltbare Vierstellungsventil 43, 43" die vier Schaltstellungen:
- jede Ringleitung 41, 41', 41", 41"'Kurzschließen,
- beide Ringleitungen 41, 41', 41", 41"' jeder Achse 39, 40 gegeneinander Sperren,
- beide Ringleitungen 41, 41', 41 ", 41"' jeder Achse 39, 40 gleichsinnig miteinander Verbinden und
   - beide Ringleitungen 41, 41', 41", 41"' jeder Achse 39, 40 gegensinnig miteinander Verbinden.

Zwei weitere schaltbare Dreistellungsventile 44, 44' verbinden oder sperren jeweils die eine Ringleitung 41 der Vorderachse 39 mit der auf der gleichen Seite befindlichen Ringleitung 41" der Hinterachse 40 sowie die Ringleitung 41' der Vorderachse 39 mit der auf der gleichen Seite angeordneten Ringleitung 41"' der Hinterachse 40.
Über zwei schaltbare Dreistellungsventile 45, 45' kann jeder Schwenkmotor 35, 36, 37, 38 der einen Achse 39, 40 diagonal mit dem Schwenkmotor 35, 36, 37, 38 der anderen Achse 39, 40 verbunden oder abgesperrt werden.

Konstruktiv können diese Ventile und ein eventuell notwendiger Druckspeicher auch ganz oder teilweise im Schwenkmotor integriert sein.

Mit diesem Schaltplan können alle Schwenkmotore 35, 36, 37, 38 beider Achsen 39, 40 wahlweise miteinander parallel oder kreuzweise verbunden oder gesperrt werden.
So können die zusammengehörenden Kammern 28, 30 gegenüber den Kammern 29, 31 durch die entsprechende Stellung des steuerbaren Dreistellungsventils 42, 42', 42", 42"' drosselfrei verbunden werden. Dadurch kommt es zu einem Austausch der Hydraulikflüssigkeit zwischen diesen Kammern 28, 30 und 29, 31 und damit zum Schwenken der Rotorflügel 27 bis zu ihrem Anschlag an die Statorflügel 25. Damit wirkt der Stabilisator über seine ganze Länge mit einer relativ geringen Federrate.

Die zusammengehörenden Kammern 28, 30 können gegenüber den Kammern 29, 31 durch die entsprechende Stellung des steuerbaren Dreistellungsventils 42, 42', 42", 42'" auch über eine Drossel miteinander verbunden sein. Das führt dazu, dass der beim Austausch der Hydraulikflüssigkeit zwischen den Kammern 28, 30 und 29, 31 entstehende Drosselwiderstand zur Unterstützung der Torsionskräfte des Stabilisators genutzt wird. Die durch den Drosselwiderstand entstehende Dämpfungskraft wirkt zusätzlich zur Federrate. Durch eine Veränderung des Drosselquerschnittes kann der Drosselwiderstand stufenlos eingestellt werden, wodurch sich eine stufenlose Erhöhung der zusätzlichen Dämpfungskraft einstellt. Das ermöglicht eine proportionale und genaue Anpassung der Stabilisatorkräfte an den jeweiligen Belastungsfall.
Außerdem können die zusammengehörenden Kammern 28, 30 gegenüber den Kammern 29, 31 durch die entsprechende Stellung des steuerbaren Dreistellungsventils 42, 42', 42", 42"' aber auch gesperrt werden. Damit ist kein Austausch der Hydraulikflüssigkeit zwischen diesen Kammern 28, 30 und 29, 31 möglich, was zur Blockade des Rotors 26 und damit des Torsionsstabes 1 führt. Das Resultat ist die Verkürzung der Verdrehlänge des einteiligen Stabilisators und damit zu einer weiteren Erhöhung der Federrate.

Das steuerbare Vierstellungsventil 43, 43' kann auch die beiden Schwenkmotore jeder Achse 39, 40 gleichsinnig oder gegensinnig verbinden. Bei einer entsprechenden äußeren Belastung auf einer Seite des Stabilisators wird dann die Hydraulikflüssigkeit aus den gleichen Kammern 28, 30 bzw. 29, 31 des auf dieser Seite befindlichen Schwenkmotors in die entsprechenden Kammern 28, 30 bzw. 29, 31 des anderen Schwenkmotors gepumpt. Das führt zu einer Druckerhöhung in den entsprechenden Kammern 28, 30 bzw. 29, 31 des anderen Schwenkmotors. Dadurch können die Stabilisatorkräfte gezielt erhöht oder vermindert werden.
Durch diese Schaltungen und Verknüpfungen nimmt der hydraulische Kreislauf einen aktiven Einfluss auf die gewünschte Beeinflussung der Kräfte des Stabilisators an den Koppelelementen 6, 7, ohne das eine zusätzliche Energiequelle erforderlich wird.
Es besteht außerdem die Möglichkeit, dass die Schwenkmotoren mit einer Energiequelle verbunden werden und somit es bei einer entsprechenden Steuerung/ Regelung zur aktiven Beeinflussung des Stabilisatorverhaltens kommt.

Diese Schaltungen und eine funktionelle Verknüpfung aller Schwenkmotore auf beiden Achsen eröffnen viele Möglichkeiten, auf das Fahrverhalten des Kraftfahrzeuges bei den unterschiedlichsten Belastungsfällen Einfluss zu nehmen und in entsprechender Weise zu reagieren. So beeinflussen die unterschiedlichen Schaltungen der beiden Schwenkmotore 35, 36, 37, 38 einer Achse 39, 40 das Wankverhalten des Kraftfahrzeuges positiv.
Dagegen verhindert die gleichzeitige Sperrung der beiden Schwenkmotore 35, 36, 37, 38 einer Achse 39, 40 ein Nicken des Kraftfahrzeuges bei einer schnell eingeleiteten Bremsung bzw. beim Beschleunigen. Zur Verstärkung dieses Effektes können die Achsen 39; 40 miteinander verschaltet sein.
Bei einer entsprechenden Schaltung aller Schwenkmotore 35, 36, 37, 38 auf beiden Achsen 39, 40 kann auch das Eigenlenkverhalten beeinflusst werden, sodass sich auch das Gierverhalten des Kraftfahrzeuges verbessert.
Dies gilt ebenso für gemischte Fahrzustände.

### Liste der Bezugszeichen

- 1: Torsionsstab
- 2: Drehschenkel
- 3: Drehschenkel
- 4: Drehgelenk
- 5: Drehgelenk
- 6: Koppelelement
- 7: Koppelelement
- 8: Radaufhängung
- 9: Radaufhängung
- 10: Aktuator
- 11: Lager
- 12: Permanent-Magnetkupplung
- 13: elektromagnetische Schaltkupplung
- 14: innerer Rotorring
- 15: Drehlager
- 16: äußerer Statorring
- 17: Drehlager
- 18: innere Polleiste
- 19: äußere Polleiste
- 20: Magnetkörper
- 21: Erregerspule
- 22: Mitnehmerflansch
- 23: Ankerkörper
- 24: Statorgehäuse
- 25: Statorflügel
- 26: Rotor
- 27: Rotorflügel
- 28: Kammer
- 29: Kammer
- 30: Kammer
- 31: Kammer
- 32: Gehäusedeckel
- 33: Hydraulikanschluss
- 34: Hydraulikanschluss
- 35: Schwenkmotor
- 36: Schwenkmotor
- 37: Schwenkmotor
- 38: Schwenkmotor
- 39: Vorderachse
- 40: Hinterachse
- 41,41',42", 43'": Ringleitung
- 42, 42', 42", 42"': steuerbares Dreistellungsventil
- 43, 43': steuerbares Vierstellungsventil
- 44, 44': steuerbares Dreistellungsventil
- 45, 45': steuerbares Dreistellungsventil

## Patentansprüche

1. Stabilisator für ein Kraftfahrzeug, der einteilig ausgeführt oder mehrteilig drehfest miteinander verbunden ist, der an beiden Enden über Drehgelenke,(4, 5) mit der jeweiligen Radaufhängung (8, 9) verbunden ist und der einen quer zur Fahrtrichtung ausgerichteten Torsionsstab (1) mit zwei Lagerstellen zur Aufhängung des Stabilisators an den Fahrzeugaufbau des Kraftfahrzeuges besitzt, wobei die beiden Lagerstellen zur Aufhängung des Stabilisators als momentaufnehmende Lager (11) ausgebildet sind und zwischen jedem Lager (11) und dem Torsionsstab (1) des Stabilisators ein steuerbarer Aktuator (10) zur Übertragung von Drehmomenten zwischen dem Torsionsstab (1) des Stabilisators und dem Fahrzeugaufbau des Kraftfahrzeuges angeordnet ist, **dadurch gekennzeichnet, dass** die beiden Lagerstellen im Bereich des Torsionsstabes (1) angeordnet sind.

2. Stabilisator nach Anspruch 1,
**dadurch gekennzeichnet, dass** die beiden Aktuatoren (10) einer Achse (39, 40) untereinander und wahlweise einzeln oder zusammen mit einzelnen oder mehreren der Aktuatoren (10) weiterer Achsen (39, 40) über eine Steuereinheit funktionell verknüpft sind.

3. Stabilisator nach Anspruch 2,
**dadurch gekennzeichnet, dass** der Aktuator (10) eine steuerbare Kupplung oder ein steuerbarer Bremsmotor ist.

4. Stabilisator nach Anspruch 3,
**dadurch gekennzeichnet, dass** der Aktuator (10) eine steuerbare Magnetkupplung ist.

5. Stabilisator nach Anspruch 4,
**dadurch gekennzeichnet, dass** die steuerbare Magnetkupplung eine Permanent-Magnetkupplung (12) ist und die Schalteinheit zur Steuerung der Permanent-Magnetkupplung (12) als eine elektromagnetische Schaltkupplung (13) ausgebildet ist.

6. Stabilisator nach Anspruch 3,
**dadurch gekennzeichnet, dass** der Aktuator (10) ein schaltbarer hydraulischer Schwenkmotor (35, 36, 37, 38) ist.

7. Stabilisator nach Anspruch 6,
**dadurch gekennzeichnet, dass** jeder Schwenkmotors (35, 36, 37, 38) mit einem hydraulischen Dreistellungsventil (42, 42', 42", 42"') ausgestattet ist, dass die gleichsinnigen Kammern (28, 29, 30, 31) eines Schwenkmotors (35, 36, 37, 38) mit den gegensinnigen Kammern (28, 29, 30, 31) desselben Schwenkmotors (35, 36, 37, 38) absperrt, drosselfrei verbindet und drosselfähig verbindet.

8. Stabilisator nach Anspruch 6,
**dadurch gekennzeichnet, dass** jeder Achse (39, 40) des Kraftfahrzeuges ein hydraulisches Vierstellungsventil (43, 43') zugeordnet ist, das die Kammern (28, 29, 30, 31) eines Schwenkmotors (35, 36, 37, 38) kurzschließt und die Kammern (28, 29, 30, 31) des einen Schwenkmotors (35, 36, 37, 38) mit den Kammern (28, 29, 30, 31) des anderen Schwenkmotors (35, 36, 37, 38) trennt, gleichsinnig verbindet und gegensinnig verbindet.

9. Stabilisator nach Anspruch 6,
**dadurch gekennzeichnet, dass** der Schwenkmotor (35, 36, 37, 38) der einen Achse (39, 40) mit dem auf der gleichen Seite der anderen Achse (39, 40) befindlichen Schwenkmotor (35, 36, 37, 38) über ein Dreistellungsventil (44, 44') verbunden oder abgesperrt ist.

10. Stabilisator nach Anspruch 6,
**dadurch gekennzeichnet, dass** der Schwenkmotor (35, 36, 37, 38) der einen Achse (39, 40) mit dem auf der gegenüberliegenden Seite zweiten der Achse (39, 40) befindlichen Schwenkmotor (35, 36, 37, 38) über ein Dreistellungsventil (45, 45') verbunden oder abgesperrt ist.

11. Stabilisator nach Anspruch 6,
**dadurch gekennzeichnet, dass** der Schwenkmotor (35, 36, 37, 38) mit einer zusätzlichen Energieversorgung und einer entsprechenden Steuerung oder Regelung versehen ist.

## Claims

1. Stabilizer for a motor vehicle, which stabilizer is designed as a single piece or consists of several pieces connected to each other in a torque-proof manner and is connected at both ends, by means of hinges (4, 5), to the respective wheel suspension (8, 9) and has a torque rod (1) that is oriented transversely to the direction of motion, which torque rod (1) has two bearings for suspending the stabilizer from the body of the motor vehicle, herein the two bearings for suspending the stabilizer are designed as bearings (11) taking up torques and a controllable actuator (10) for the transmission of torques between the torque rod (1) of the stabilizer and the body of the motor vehicle is arranged between each bearing (11) and the torque rod (1) of the stabilizer, **characterized in that** the two bearings are arranged in the region of the torque rod (1).

2. Stabilizer according to Claim 1, **characterized in that** the two actuators (10) of an axle (39, 40) are functionally linked up with each other and optionally individually or jointly with individual or several actuators (10) of other axles (39, 40) by means of a control unit.

3. Stabilizer according to Claim 2, **characterized in that** the actuator (10) is a controllable clutch or a controllable brake motor.

4. Stabilizer according to Claim 3, **characterized in that** the actuator (10) is a controllable magnetic clutch.

5. Stabilizer according to Claim 4, **characterized in that** the controllable magnetic clutch is a permanent magnet clutch (12) and the switching unit for controlling the permanent magnet clutch (12) is designed as an electromagnetic clutch (13).

6. Stabilizer according to Claim 3, **characterized in that** the actuator (10) is a switchable hydraulic oscillating motor (35, 36, 37, 38).

7. Stabilizer according to Claim 6, **characterized in that** each oscillating motor (35, 36, 37, 38) is equipped with a hydraulic three-position valve (42, 42', 42", 42"') that shuts the same-direction chambers (28, 29, 30, 31) of an oscillating motor (35, 36, 37, 38) against the opposite-direction chambers (28, 29, 30, 31) of the same oscillating motor (35, 36, 37, 38) and establishes a throttle-free connection and a throttleable connection between said chambers.

8. Stabilizer according to Claim 6, **characterized in that** a hydraulic four-position valve (43, 43') is assigned to each axle (39, 40) of the motor vehicle, which hydraulic four-position valve (43, 43') short-circuits the chambers (28, 29, 30, 31) of an oscillating motor (35, 36, 37, 38) and separates the chambers (28, 29, 30, 31) of one oscillating motor (35, 36, 37, 38) from the chambers (28, 29, 30, 31) of the other oscillating motor (35, 36, 37, 38) and establishes a same-direction connection and an opposite-direction connection between said chambers.

9. Stabilizer according to Claim 6, **characterized in that** the oscillating motor (35, 36, 37, 38) of one axle (39, 40) is connected to or shut against the oscillating motor (35, 38, 37, 38) positioned on the same side of the other axle (39, 40) by means of a three-position valve (44, 44').

10. Stabilizer according to Claim 6, **characterized in that** the oscillating motor (35, 36, 37, 38) of one axle (39, 40) is connected to or shut against the oscillating motor (35, 36, 37, 38) positioned on the opposite side of the second axle (39, 40) by means of a three-position valve (45, 45').

11. Stabilizer according to Claim 6, **characterized in that** the oscillating motor (35, 36, 37, 38) is provided with an additional power supply and with a corresponding control system or automatic controller.

## Revendications

1. Stabilisateur pour véhicule automobile qui est réalisé d'une seule pièce ou en plusieurs pièces raccordées entre elles de façon résistante à la torsion, qui est, aux deux extrémités, raccordé à la suspension de roue (8, 9) respective par le biais d'articulations tournantes (4, 5) et qui possède une barre de torsion (1) dirigée transversalement à la direction de conduite, avec deux points d'appui pour la suspension du stabilisateur à la carrosserie du véhicule automobile, les deux points d'appui pour la suspension du stabilisateur étant constitués comme des supports (11) reprenant le moment, et un actionneur (10) asservi pour la transmission de couples entre la barre de torsion (1) du stabilisateur et la carrosserie du véhicule automobile étant disposé entre chaque appui (11) et la barre de torsion du stabilisateur,
**caractérisé en ce que** les deux points d'appui sont disposés dans la zone de la barre de torsion (1).

2. Stabilisateur selon la revendication 1,
**caractérisé en ce que** les deux actionneurs (10) d'un essieu (39, 40) sont reliés de façon opérationnelle l'un à l'autre et au choix individuellement ou ensemble à des actionneurs (10) uniques ou à plusieurs des actionneurs (10) d'autres essieux (39, 40) par le biais d'une unité de commande.

3. Stabilisateur selon la revendication 2,
**caractérisé en ce que** l'actionneur (10) est un accouplement asservi ou un motofrein asservi.

4. Stabilisateur selon la revendication 3,
**caractérisé en ce que** l'actionneur (10) est un accouplement à aimant asservi.

5. Stabilisateur selon la revendication 4,
**caractérisé en ce que** l'accouplement à aimant asservi est un accouplement à aimant permanent (12) et **en ce que** l'unité de commande pour commander l'accouplement à aimant permanent (12) est constituée en tant qu'embrayage (13) électromagnétique.

6. Stabilisateur selon la revendication 3,
**caractérisé en ce que** l'actionneur (10) est un moteur pivotant (35, 36, 37, 38) hydraulique commutable.

7. Stabilisateur selon la revendication 6,
**caractérisé en ce que** chaque moteur pivotant (35, 36, 37, 38) est équipé d'une vanne à trois positions (42, 42', 42", 42"') qui bloque, raccorde sans étranglement et raccorde de façon étranglable, les chambres (28, 29, 30, 31) de même sens d'un moteur pivotant (35, 36, 37, 38) avec les chambres (28, 29, 30, 31) de sens opposé du même moteur pivotant (35, 36, 37, 38),.

8. Stabilisateur selon la revendication 6,
**caractérisé en ce qu'**à chaque essieu (39, 40) du véhicule automobile est affectée une vanne à quatre positions (43, 43') qui met en court-circuit les chambres (28, 29, 30, 31) d'un moteur pivotant (35, 36, 37, 38) et sépare, raccorde dans le même sens et raccorde dans le sens opposé, les chambres (28, 29, 30, 31) d'un moteur pivotant (35, 38, 37, 38) avec les chambres (28, 29, 30, 31) de l'autre moteur pivotant (35, 36, 37, 38).

9. Stabilisateur selon la revendication 6,
**caractérisé en ce que** le moteur pivotant (35, 36, 37, 38) d'un essieu (39, 40) est raccordé, ou bien est bloqué, au moteur pivotant (35, 36, 37, 38) situé sur le même côté de l'autre essieu (39, 40) par le biais d'une vanne à trois positions (44, 44').

10. Stabilisateur selon la revendication 6,
**caractérisé en ce que** le moteur pivotant (35, 36, 37, 38) d'un essieu (39, 40) est raccordé, ou bien est bloqué, au moteur pivotant (35, 36, 37, 38) situé sur le côté opposé du deuxième essieu (39, 40) par le biais d'une vanne à trois positions (45, 45').

11. Stabilisateur selon la revendication 6,
**caractérisé en ce que** le moteur pivotant (35, 36, 37, 38) est muni d'une alimentation en énergie supplémentaire et d'une commande ou régulation correspondante.
